**Europäisches Patentamt**

**European Patent Office**

**Office européen des brevets**

(19)

(11) Numéro de publication : **0 407 264 B1**

## (12) FASCICULE DE BREVET EUROPEEN

(45) Date de publication du fascicule du brevet :
**16.06.93 Bulletin 93/24**

(51) Int. Cl.⁵ : **A01G 31/00**

(21) Numéro de dépôt : **90401840.5**

(22) Date de dépôt : **27.06.90**

(54) **Elément de culture hors-sol.**

(30) Priorité : **03.07.89 FR 8908866**

(43) Date de publication de la demande :
**09.01.91 Bulletin 91/02**

(45) Mention de la délivrance du brevet :
**16.06.93 Bulletin 93/24**

(84) Etats contractants désignés :
**AT BE CH DE DK ES FR GB GR IT LI LU NL SE**

(56) Documents cités :
**EP-A- 133 083**
**EP-A- 0 310 501**
**US-A- 4 777 763**

(73) Titulaire : **ISOVER SAINT-GOBAIN**
**Les Miroirs 18, avenue d'Alsace**
**F-92400 Courbevoie (FR)**

(72) Inventeur : **Kafka, Bernard**
**3, avenue du Grand, Auvillers**
**F-60290 Rantigny (FR)**

(74) Mandataire : **Le Vaguerèse, Sylvain Jacques**
**et al**
**SAINT-GOBAIN RECHERCHE 39, quai Lucien**
**Lefranc**
**F-93300 Aubervilliers Cédex (FR)**

EP 0 407 264 B1

## Description

L'invention concerne les techniques de culture hors-sol. Plus précisément, l'invention se rapporte aux techniques dans lesquelles la culture met en jeu plusieurs étapes successives de croissance des plantes, chaque étape conduisant à l'utilisation d'un substrat offrant un volume supérieur à celui du précédent pour permettre un développement satisfaisant du système racinaire de la plante.

Dans les modes intensifs de culture hors-sol, une bonne gestion des matériaux et de l'espace disponible conduit à une succession d'étapes correspondant à la mise en oeuvre de substrats spécifiques.

Le mode le plus répandu à l'heure actuelle dans les cultures hors-sol en serre comporte ainsi au moins deux étapes successives. La première étape correspond à la croissance initiale des plants. Ceux-ci étant peu volumineux et présentant un développement limité du système racinaire, le professionnel utilise de préférence à ce stade un substrat de volume restreint. Ceci permet de multiplier le nombre de plants cultivés sur un espace limité. Cela permet aussi de minimiser le volume de solution nutritive nécessaire pour entretenir le substrat dans les conditions adéquates pour le développement des plants. Dans une deuxième étape, les plants qui ont grandi sur ces substrats de volume limité sont disposés, avec le premier substrat, sur un deuxième substrat offrant un volume plus important, et ordinairement espacés les uns des autres.

L'invention est relative aux substrats minéraux sur lesquels sont développés les plants ne requérant qu'un volume limité dont l'ordre de grandeur est de 1 dm³. Plus précisément, l'invention est relative à des substrats en fibres minérales tels que ceux constitués de laine de verre ou de laine de roche.

Les substrats considérés selon l'invention sont de forme générale parallélépipèdique. Cette forme est celle qui, du point de vue des producteurs comme des utilisateurs, est sensiblement la plus pratique. Le transport de ces substrats, en évitant tout volume perdu, en est amélioré. Leur production en est aussi beaucoup facilitée et se prête à une automatisation poussée. Ces avantages sont très sensibles pour des produits qui doivent nécessairement être proposés à des prix très bas. Pour l'utilisateur, la forme parallélépipèdique permet des regroupements commodes de ces éléments sur une surface réduite dans les stades de la culture où les plants étant peu développés, il est avantageux de minimiser la surface occupée.

Pour la commodité de l'exposé, nous désignerons dans la suite ces éléments de substrats sous la nom de "cubes" étant entendu qu'ils ne présentent pas nécessairement, ni même généralement, une forme vraiment cubique. Ce nom est néanmoins choisi car il correspond à celui qui est ordinairement retenu par les utilisateurs.

Il est nécessaire pour bien comprendre le problème que se propose de résoudre l'invention de détailler davantage les conditions de culture sur ces "cubes".

Dans les modes de culture intensive qui représentent les débouchés les plus significatifs pour ce type de produits que sont les "cubes", ceux-ci sont dans un premier temps disposés les uns contre les autres sur une large surface. Dans ce type d'arrangement, il est nécessaire d'aménager à la fois une irrigation satisfaisante et une aération convenable pour assurer la croissance la plus complète et la plus rapide des plants. L'irrigation peut être effectuée soit par la partie supérieure des cubes, soit par leur base, c'est-à-dire la partie reposant sur le sol. Ces types d'opération d'irrigation sont conduits suivant un rythme dépendant à la fois de la culture considérée et des conditions ambiantes (saison, température, évaporation...). Après un certain développement des plants, il est usuel d'écarter les cubes les uns des autres pour offrir plus d'espace et de lumière. A ce stade encore, l'irrigation est avantageusement conduite comme indiqué ci-dessus, mode que l'on désigne par le terme de "subirrigation".

Dans ces étapes de la culture sur cubes, nous avons vu comment pouvait être effectuée l'irrigation. Nous avons dit aussi qu'il était nécessaire d'assurer une bonne aération des racines. Cette aération est une condition nécessaire au bon développement de celles-ci.

Si l'aération des cubes dépend des conditions d'irrigation, elle dépend d'abord des cubes eux-mêmes.

Des dispositions ont été proposées par ailleurs pour améliorer l'aération des cubes en intervenant, par exemple, sur la conformation de ceux-ci. Dans ces dispositions antérieures, il est principalement envisagé d'éviter que les cubes n'aient une trop grande surface de contact avec le support sur lequel ils reposent. Le but est alors essentiellement de favoriser le "drainage" du cube. Autrement dit, partant d'un matériau dont les caractéristiques vis-à-vis de la rétention d'eau sont connues, il s'agit de faire en sorte, en jouant sur la forme des cubes, de modifier les caractéristiques "usuelles" de ces matériaux.

Une difficulté rencontrée avec les cubes antérieurs est, non seulement d'aboutir à un bon rapport air/eau, mais encore, de faire en sorte que ce rapport soit maintenu le plus longtemps possible entre deux apports de solution lorsque celle-ci est conduite de façon discontinue. Plus encore, il est important de limiter autant que possible les différences qui peuvent exister entre les différents niveaux dans la hauteur du cube.

C'est pour éviter par exemple la formation d'une partie entièrement saturée d'eau à leur base, que l'on a proposé antérieurement d'utiliser des cubes dont les fibres sont préférentiellement orientées dans des plans sensiblement verticaux. Avec le même feutre constituant le matériau de base, suivant que les fibres sont dans des plans horizontaux ou verticaux, la distribution de la solution serait sensiblement différente.

Par ailleurs, l'usage de cubes à fibres verticales donnerait aux cubes une meilleure tenue mécanique, notamment une meilleure résistance à l'écrasement. Cette propriété est particulièrement recherchée lorsque l'on utilise des feutres dont la masse volumique est relativement faible, ce qui correspond à des fibres plus fines et donc offrant moins de résistance à la déformation en situation de culture.

A l'expérience cependant, le choix de matériaux dont les fibres sont principalement dans des plans verticaux ne satisfait pas pleinement aux besoins des horticulteurs. Il est apparu, au cours des études de ces matériaux, que la résistance mécanique et le rapport air/eau, même très importants, ne rendent pas complètement compte des exigences de la croissance des plantes. Les inventeurs ont pu mettre en évidence que la distribution des racines dans le matériau de culture est un facteur très sensible et que cette distribution demandait encore à être améliorée.

Si la croissance des plants sur des cubes à fibres "verticales" est favorisée par un meilleur drainage et par suite par l'obtention d'un rapport air/eau plus élevé, la verticalité des fibres semble limiter la diffusion des racines dans le cube. De façon simplifiée, dans ce type de cube, la croissance des racines se fait préférentiellement de haut en bas avec une colonisation transversale limitée. Les raisons de cette forme de croissance ne sont pas parfaitement déterminées. Nous essaierons plus loin quelques hypothèses en voyant les résultats d'exemples de comparaison avec des réalisations selon l'invention.

Les inventeurs ont montré que, pour des cubes de culture en fibres minérales, il était possible d'améliorer la colonisation du matériau par les racines sans occasionner de difficulté pour ce qui concerne notamment les propriétés mécaniques, en utilisant un feutre dont la structure n'est pas celle des feutres les plus usuels.

A ce propos, on sait que les substrats minéraux fibreux utilisés dans la culture hors-sol sont des produits dérivés de leur destination d'origine, laquelle est l'isolation thermique. En pratique, les industriels qui ont eu l'idée d'utiliser ces produits en horticulture ont, à l'origine, limité les modifications des produits de base au strict minimum qui était de les rendre mouillables là où, traditionnellement, en isolation on recherchait des produits hydrophobes. Le mode de fabrication des feutres servant à la fabrication des substrats de culture hors-sol est, pour cette raison, la même que celle des feutres d'isolation notamment pour ce qui concerne la formation des fibres et les étapes ultérieures conduisant à la constitution d'un feutre. Il est bien connu que, dans les modes usuels de production, les fibres recueillies sur un convoyeur perméable aux gaz ont tendance à se placer en strates parallèles au plan du convoyeur de réception. Cette orientation préférentielle, qui est inhérente aux techniques de production, se retrouve dans le produit final. Dans le cas des substrats dits à "fibres verticales", la structure du matériau de base reste inchangée. Seule la position du matériau dans le substrat est modifiée. Au lieu d'une utilisation du feutre "horizontale", par une rotation du matériau dans les éléments de culture, le feutre est utilisé verticalement. On retrouve donc, dans ce cas, en position "verticale" les strates qui, initialement, se forment parallèlement au plan du convoyeur de réception.

Les inventeurs ont montré qu'une amélioration de la croissance des plants et une meilleure colonisation du matériau des cubes pouvaient être obtenues en utilisant un matériau dans lequel les fibres ne sont pas disposées préférentiellement sous forme stratifiée mais, autant que possible, sont orientées de façon aléatoire dans toutes les directions et, par ailleurs, présentent une masse volumique limitée comprise entre 20 et 70 kg/m$^3$.

Des isolants à base de feutres minéraux présentant ce type de structure sont connus, par exemple, du brevet européen EP-B-0 133 083. Le but poursuivi dans ce document antérieur est de constituer des feutres d'isolation présentant une très bonne résistance mécanique, notamment à la compression, et qui sont utilisés par exemple dans les terrasses de bâtiments.

Il s'est avéré que les feutres qui présentent une structure analogue à celle des produits fibreux isolants de l'art antérieur cité, favorisent une distribution avantageuse du système racinaire dans la culture des plants.

Le mode d'obtention des substrats selon l'invention détermine également leur structure. Ce mode est celui décrit dans le brevet européen cité. Selon ce brevet il s'agit, à partir d'une nappe de fibres reçue sur un tapis convoyeur, d'assurer un réarrangement de l'orientation des fibres. La nappe formée sur le convoyeur présente des strates comme indiqué précédemment. Le réarrangement s'effectue en comprimant la nappe dans le sens longitudinal. Cette opération, que l'on nomme également crêpage, est effectuée de façon continue sur la nappe avant d'en fixer la structure par réticulation du liant.

L'opération de crêpage, qui correspond à la compression longitudinale, ne doit pas être confondue avec la compression exercée dans l'épaisseur de la nappe dans pratiquement toutes les fabrications de feutres d'isolation. Cette dernière a pour principal objet de fixer l'épaisseur du produit final et sa masse volumique. La compression s'exerçant perpendiculairement au plan des strates de fibres n'entraîne pas de modification de la stratification, sinon un resserrement des strates.

Ceci étant précisé, il va de soi que la compression longitudinale conduisant au crêpage des fibres peut être combinée avec une compression dans l'épaisseur de la nappe, ces opérations étant simultanées ou consécutives.

La compression longitudinale peut atteindre des proportions élevées qui sont fonction de plusieurs facteurs : dimensions des fibres constituant la nappe, épaisseur et masse volumique de la nappe, etc... Pour obtenir un réarrangement significatif de l'orientation des fibres, le taux de compression longitudinal est supérieur à 1,5 et, de préférence, supérieur à 2.

On désigne sous le nom de "taux de compression" le rapport des longueurs avant et après compression.

Pour les nappes initialement à très faible masse volumique et compte tenu des masses volumiques mises en oeuvre dans les matériaux de culture hors-sol, le taux de compression peut s'élever jusqu'à 10 et plus. De façon habituelle, le taux ne dépasse pas 6.

De façon préférée, les cubes selon l'invention présentent une masse volumique comprise de préférence entre 30 et 60 kg/m$^3$.

Les raisons économiques poussent à utiliser les produits les plus légers. On peut gagner en coût de matériau et aussi en coût de transport. Par ailleurs, les produits légers sont aussi souvent ceux dont les fibres sont les plus fines et qui, pour cette raison, offrent les rétentions d'eau rapportées à la masse de fibres les plus élevées. Néanmoins, la légèreté ne doit pas compromettre la tenue du cube lors de son utilisation. Même convenablement crêpé ce qui, en modifiant la répartition des fibres, améliore la résistance mécanique, le cube ne doit pas, de préférence, être à moins de 20 kg/m$^3$. Dans ce domaine les cubes en fibres de verre, fibres dont les dimensions peuvent être longues et fines, figurent parmi les produits dont la masse volumique peut être la plus petite. Une autre raison fait qu'une masse volumique minimum est préférable. Il convient, en effet, que ces cubes présentent une certaine stabilité au cours de leur utilisation. Ils sont généralement simplement posés sur le support qui les reçoit. Il faut éviter que la plante croissant sur le cube puisse renverser celui-ci. Il faut surtout que les cubes ne subissent pas de déformations importantes à la compression et, qu'en particulier, ils puissent être saisis, même chargés en solution, sans trop se déformer. Il est important en effet que les manipulations des cubes, par exemple au moment de l'éclaircissement ou de la mise sur les pains, n'occasionnent pas un dégainage de ceux-ci. Une certaine masse volumique est donc préférable.

La dimension des fibres est aussi un facteur influant sur la qualité des produits. Précédemment, dans la constitution des substrats minéraux, la tendance a été d'utiliser des fibres parmi les plus fines réalisables. Le but était de favoriser la capillarité des produits par un accroissement du rapport surface de fibre/masse de fibres. L'expérience de la culture montre là encore que, pour favoriser la croissance du système racinaire de façon homogène, et pour les masses volumiques préférées indiquées ci-dessus, il est avantageux de choisir des fibres dont le diamètre moyen se situe entre 2 et 9 micromètres avec, de préférence, un diamètre compris entre 4 et 7. Le micronaire de ces fibres se situe entre 1 et 7 sous 5 g.

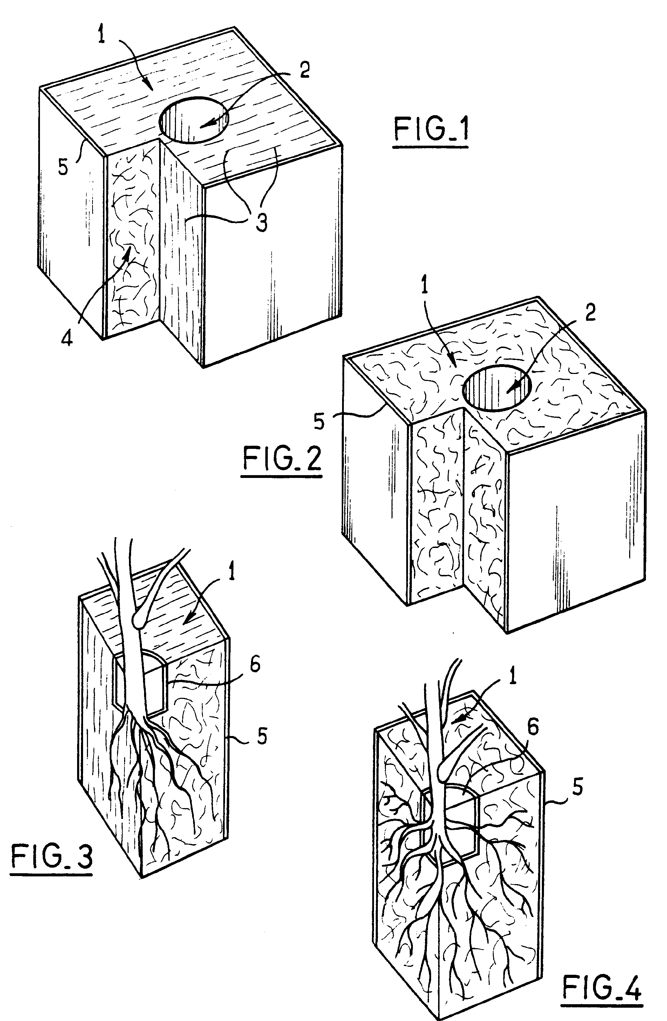

L'invention est décrite, de façon plus détaillée, en faisant référence à la planche de dessins dans laquelle :
  . **la figure 1** représente, en perspective et en coupe partielle, un cube traditionnel,
  . **la figure 2** est une vue analogue à la précédente présentant un cube selon l'invention,
  . **la figure 3** montre, de façon schématique, le mode de progression des racines dans un cube traditionnel,
  . **la figure 4** montre, de façon schématique, le mode de progression des racines dans un cube selon l'invention.

La figure 1 présente un cube traditionnel. Celui-ci se compose ordinairement d'un bloc de laine minérale (1) dont les dimensions sont de l'ordre d'une dizaine de centimètres de côté.

Traditionnellement, la face supérieure du cube comporte un évidement (2) dans lequel vient se loger un "bouchon" (6). On désigne ainsi le support de petites dimensions - quelques centimètres - constitué par un matériau sur lequel la germination est faite au début de la culture. Le passage de la croissance du plant par l'utilisation du bouchon n'est pas une nécessité. Cette étape est mise en oeuvre dans les entreprises horticoles travaillant sur de très grandes séries. Elle permet, dans ce cas, un gain d'espace très sensible pour les premiers jours de la culture. Le bouchon est d'un matériau qui peut être de même nature que celui du cube ou différent.

La structure du cube est telle que les strates (3) de matériau fibreux sont disposées verticalement. La disposition est ordinairement visible dans la mesure où des variations légères de coloration liées à la présence d'un liant fait apparaître des "stries" sur la face supérieure. Les mêmes stries sont également visibles sur les faces latérales auxquelles les strates sont perpendiculaires.

La distribution des fibres dans le "plan" d'une strate parait, au contraire, parfaitement aléatoire. C'est ce qui est représenté dans le plan de coupe (4). La même disposition aléatoire se trouve, bien entendu, sur les deux autres faces latérales parallèles aux strates qui ne sont pas découvertes sur la figure 1.

Le cube est enveloppé habituellement par une gaine (5) tendue sur les quatre faces latérales. Cette gaine est ordinairement en polyéthylène ou tout autre film synthétique présentant les mêmes propriétés. Le film de la gaine est habituellement maintenu sur le cube par rétraction à la chaleur. Le rôle du film est de limiter l'évaporation du cube, d'empêcher les racines de sortir par les faces latérales et d'éviter la croissance d'algues sur le cube. Pour cette dernière raison, le matériau de la gaine est avantageusement opaque aux U.V.

Les mêmes éléments sont représentés à la figure 2 pour un cube réalisé dans un matériau selon l'invention. La différence de traitement, c'est-à-dire la compression longitudinale des feutres ou crêpage, rompt la "stratification" traditionnelle des fibres. Lorsque la compression est conduite de façon satisfaisante suivant les indications énoncées précédemment, la structure est pratiquement identique dans toutes les directions. C'est ce qui est présenté à la figure 2 qui montre des fibres sans orientation préférentielle, quel que soit le plan considéré.

Un des principaux avantages de l'utilisation des cubes selon l'invention, vis-à-vis des cubes traditionnels, est illustré aux figures 3 et 4. Sur ces deux figures qui représentent, en coupe, chacune un quart du cube ; sont représentés de manière schématique les modes typiques de croissance sur chacun des matériaux.

Dans le matériau traditionnel de la figure 3, la croissance des racines s'effectue de façon privilégiée entre les strates. Les racines semblent passer difficilement d'une strate à la suivante, comme si elles rencontraient un obstacle à leur cheminement. La croissance, dans les plans parallèles aux strates, favorise une progression rapide des racines vers les parties basses du cube ou sur les côtés. Dans ces conditions, la colonisation du cube par les racines n'est que très partielle.

La croissance sur l'échantillon selon l'invention à la figure 4 montre, par opposition, une bonne diffusion des racines dans l'ensemble du matériau du cube dans toutes les directions. Le cube est donc mieux "utilisé" pour ses fonctions d'alimentation de la plante en air et solution nutritive. Par ailleurs, pour des durées de culture identiques, les plants croissant sur les produits selon l'invention sont mieux développés.

Dans les réalisations antérieures, on constate que l'effet de stratification qui s'oppose à la pénétration des racines est d'autant plus sensible que le feutre est constitué de fibres longues et fines formant un réseau plus serré. Pour cette raison, le choix de cubes répondant aux caractéristiques de l'invention est particulièrement utile avec les fibres de verre.

Des essais comparatifs ont été conduits sur des plants de tomates de variété Capello.

Les cultures sont faites sur des cubes de fibres de verre. Ce verre est un de ceux utilisés pour les produits destinés à l'isolation. Sa composition est :

| | | | | |
|---|---|---|---|---|
| $SiO_2$ | 64,1 % | | $Na_2$ | 15,75 % |
| $Al_2O_3$ | 3,4 % | | $K_2O$ | 1,15 % |
| $CaO$ | 7,2 % | | $B_2O_3$ | 4,5 % |
| $MgO$ | 3 % | | $Fe_2O_3$ | 0,45 % |
| $SO_3$ | 0,25 % | | Impuretés | 0,2 % |

Les feutres ont une masse volumique de 45 kg/m³ et leur micronaire est de 5 sous 5 g (ce qui correspond à des fibres dont le diamètre moyen est d'environ 6 micromètres).

Dans une première série d'échantillons, le feutre est maintenu stratifié. Aucune compression longitudinale n'est réalisée lors de sa fabrication.

Dans une seconde série d'échantillons, le feutre utilisé est le résultat, après réception sur un tapis convoyeur, d'une ou plusieurs compressions longitudinales avec un taux de 4.

Les cubes sont de 100 x 100 x 65 mm. Dans le cube "feuilleté" ou stratifié, les strates sont verticales.

La culture est effectuée selon l'ordre suivant :

. semis au temps = 0 sur des bouchons de laine de verre,

. à 2 semaines, repiquage des bouchons sur les cubes disposés côte à côte,

. à 5 semaines, écartement des cubes à raison de 8/m² au sol,

. à 6 semaines, les plants sont prêts pour un transport des cubes sur les pains de culture.

La croissance est arrêtée à ce stade. Les plants sont coupés au niveau supérieur du cube et l'on mesure la masse végétale aérienne fraîche et sèche des deux séries d'échantillons.

La moyenne sur 12 plants de chacune des séries fait apparaître :

. échantillon sur cube stratifié :

- masse fraîche : 239 g

- masse sèche : 24,1 g

. échantillon sur cube selon l'invention :

- masse fraîche : 266 g

- masse sèche : 27,1 g

La comparaison montre une progression d'environ 10 % de la masse végétale aérienne dans le cas de l'invention. Cette constatation est complétée par l'observation de la croissance des racines sur des coupes des cubes. Il ressort clairement sur ces coupes une colonisation plus complète des cubes selon l'invention.

Dans ce qui précède, il a été indiqué que les feutres en fibres de verre convenaient bien pour l'usage considéré. S'ajoutent à ce résultat des raisons d'ordre économique qui font que ces feutres sont très avantageux dans certains cas. Dans ce sens, il faut souligner une fois encore l'origine de ces produits. Nous avons vu qu'ils sont dérivés des productions de feutres d'isolation. Compte tenu de la répartition géographique des unités de production de fibres de verre d'isolation, il est possible de fabriquer les cubes de culture selon l'invention à proximité des zones d'utilisation et, par suite, de minimiser les coûts de transport et de stockage.

## Revendications

1. "Cube" pour la croissance de plants dans le domaine de la culture hors-sol constitué d'un matériau fibreux minéral dans lequel les fibres sont liées entre elles au moyen d'un liant, éventuellement gainé sur ses faces latérales par un film imperméable, **caractérisé en ce que** les fibres du matériau sont disposées sans ordre préférentiel quelle que soit la direction considérée, ledit matériau étant susceptible d'être obtenu par collecte des fibres individuelles sous forme d'une nappe ou feutre, et compression de cette nappe dans le sens longitudinal, le taux de compression dépendant de la masse volumique initiale de la nappe.

2. Cube selon la revendication 1 dans lequel le taux de compression longitudinale est choisi de telle façon que la masse volumique, après compression, soit comprise entre 20 et 30 kg/m$^3$.

3. Cube selon la revendication 2 dans lequel le taux de compression longitudinale est compris entre 1,5 et 10.

4. Cube selon la revendication 1 constitué de fibres de verre dont le diamètre moyen est compris entre 2 et 9 micromètres.

5. Cube selon la revendication 1 constitué de fibres de verre dont le diamètre moyen est compris entre 4 et 7 micromètres.

6. Cube selon la revendication 1 constitué de fibres de verre dont le micronaire est compris entre 1 et 7 sous 5 g.

## Patentansprüche

1. Block für Pflanzenwachstum auf dem Gebiet der erdelosen Kulturverfahren, bestehend aus einem mineralischen Fasermaterial, worin die Fasern untereinander durch ein Bindemittel gebunden sind, gegebenenfalls an seinen Seitenflächen von einer undurchlässigen Folie umhüllt, **dadurch gekennzeichnet, daß** die Fasern des Materials ohne bevorzugte Orientierung nach irgendeiner Richtung angeordnet sind, wobei das Material durch Sammlung der einzelnen Fasern in Form eines Vlieses oder Filzes und durch Kompression des Vlieses in Längsrichtung erhältlich ist, wobei das Kompressionsverhältnis von der anfänglichen Rohdichte des Vlieses abhängt.

2. Block nach Anspruch 1, wobei die Kompressionsrate in Längsrichtung so gewählt ist, daß die Rohdichte nach Kompression zwischen 20 und 30 kg/m$^3$ liegt.

3. Block nach Anspruch 2, wobei das Kompressionsverhältnis in Längsrichtung zwischen 1,5 und 10 liegt.

4. Block nach Anspruch 1, bestehend aus Glasfasern mit einem mittleren Durchmesser zwischen 2 und 9 µm.

5. Block nach Anspruch 1, bestehend aus Glasfasern mit einem mittleren Durchmesser zwischen 4 und 7 µm.

6. Block nach Anspruch 1, bestehend aus Glasfasern mit einem Micronaire-Wert zwischen 1 und 7/5 g.

**Claims**

1.   "Cube" for plant growing in the field of soil-free culture, comprising a fibrous mineral substance in which the fibres are joined to one another by means of a bonding agent, and can optionally be covered on its lateral surfaces by an impermeable film, characterised in that the fibres of the substance are disposed at random, irrespective of the direction concerned, the said substance being obtainable as a result of individual fibres being gathered in the form of a fleece or felt, and by this fleece being compressed longitudinally, the level of compression being dependent on the original density of the fleece.

2.   Cube according to Claim 1, in which the level of longitudinal compression is such that the density after compression is between 20 and 30 kg/m$^3$.

3.   Cube according to Claim 2, in which the level of longitudinal compression is between 1.5 and 10.

4.   Cube according to Claim 1, comprising glass fibres of which the average diameter is between 2 and 9 m.

5.   Cube according to Claim 1, comprising glass fibres of which the average diameter is between 4 and 7 μm.

6.   Cube according to Claim 1, comprising glass fibres, of which the permeability coefficient is between 1 and 7 at 5 g.

FIG.1

FIG.2

FIG.3

FIG.4